**Europäisches Patentamt**

**European Patent Office**

**Office européen des brevets**

(19)

(11) Numéro de publication : **0 322 292 B1**

(12)

# FASCICULE DE BREVET EUROPEEN

(45) Date de publication du fascicule du brevet :
**25.03.92 Bulletin 92/13**

(51) Int. Cl.$^5$ : **B01J 8/02, F28D 9/00**

(21) Numéro de dépôt : **88403216.0**

(22) Date de dépôt : **16.12.88**

(54) **Réacteur à contrôle thermique interne par plaques creuses échangeuses de chaleur.**

(30) Priorité : **23.12.87 FR 8718204**

(43) Date de publication de la demande :
**28.06.89 Bulletin 89/26**

(45) Mention de la délivrance du brevet :
**25.03.92 Bulletin 92/13**

(84) Etats contractants désignés :
**AT BE CH DE GB IT LI NL SE**

(56) Documents cités :
**DE-A- 3 410 592**
**DE-B- 1 045 990**
**GB-A- 2 046 618**
**GB-A- 2 130 498**
**US-A- 3 666 423**

(73) Titulaire : **INSTITUT FRANCAIS DU PETROLE**
**4, Avenue de Bois Préau**
**F-92506 Rueil-Malmaison Cédex (FR)**

(72) Inventeur : **Dang Vu, Quang**
**48 bis, Boulevard du Général Leclerc**
**F-92200 Neuilly (FR)**
Inventeur : **Huin, Roland**
**58, rue de Cormeilles**
**F-78360 Montesson Laborde (FR)**
Inventeur : **Euzen, Jean-Paul**
**45, Chemin Bachely**
**F-69570 Dardilly (FR)**

(74) Mandataire : **Andreeff, François et al**
**INSTITUT FRANCAIS DU PETROLE 4, avenue**
**de Bois-Préau**
**F-92506 Rueil-Malmaison Cédex (FR)**

EP 0 322 292 B1

Jouve, 18, rue Saint-Denis, 75001 PARIS

## Description

La présente invention concerne un appareil, souvent utilisé sous pression, pour effectuer des réactions chimiques, généralement en présence d'au moins un catalyseur, par exemple solide, dans au moins une zone réactionnelle équipée de plaques échangeuses de chaleur qui permettent de contrôler la température de cette zone réactionnelle.

Il est connu, lorsque la température de la réaction doit être maintenue dans des limites relativement étroites, de placer au sein du lit catalytique un appareil de transfert thermique soit à base de tubes (GB-B-2046618), soit à base de plaques (US-A-3666423 et GB-A-2130498), soit à base de grilles (US-A-4693807), et de faire circuler à l'intérieur de cet appareil un fluide destiné au transfert thermique et communément désigné sous le nom de fluide caloporteur.

L'inconvénient dans l'utilisation d'un appareil de transfert thermique à base de tubes provient du fait que la liaison entre ces tubes individuels est très encombrante et que, par conséquent, le montage de l'ensemble est très difficile à réaliser correctement à l'intérieur du réacteur. L'inconvénient de l'appareil de transfert thermique à base de plaques du brevet US-A-3666423 est son encombrement et sa faible efficacité. Pour pouvoir résister à la pression réactionnelle, les plaques ne sont que partiellement évidées et le fluide caloporteur ne dispose ainsi que d'une faible partie de la surface des plaques pour faire son travail d'échange.

La présente invention permet de remédier à ces inconvénients les plaques utilisées dans l'invention travaillent très peu à la contrainte ce qui permet de les évider totalement et de laisser le fluide caloporteur assurer l'échange à travers la totalité de la surface disponible. De plus, le montage et les connexions sont suffisamment simples pour être réalisés facilement dans l'espace restreint offert par le réacteur.

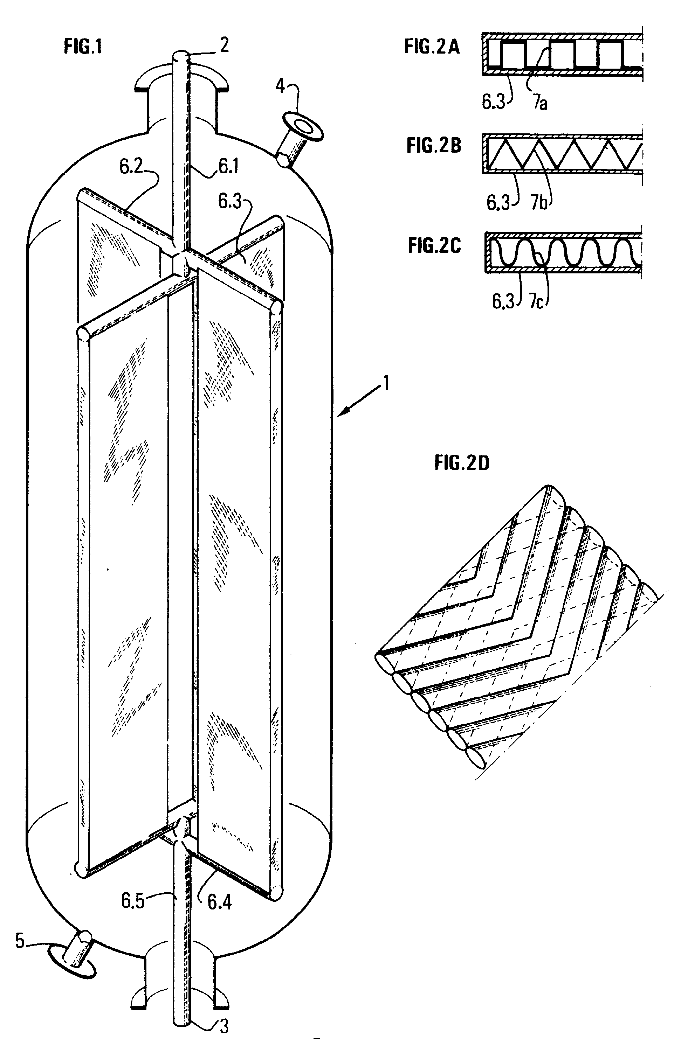

La figure 1 représente l'appareil selon l'invention, les plaques ayant été représentées avec des faces planes (ce qui correspond à une forme de réalisation préférentielle de l'invention) afin de ne pas surcharger la figure. Les figures 2a, 2b, 2c et 2d représentent des plaques selon différents perfectionnements de l'invention.

L'objet de la présente invention est un appareil (voir figure 1) comportant un réacteur (1) de forme sensiblement cylindrique et dont la section en coupe a une forme sensiblement circulaire, au moins une conduite (2) pour l'introduction d'un fluide caloporteur, au moins une conduite (3) pour le soutirage dudit fluide, au moins une conduite (4) pour l'introduction d'une charge dans le réacteur et au moins une conduite (5) pour le soutirage de l'effluent réactionnel du réacteur, caractérisé en ce qu'il renferme :

(a) au moins un collecteur distributeur central (6.1), par exemple vertical, dont l'axe correspond à l'axe du réacteur, qui est situé dans la partie supérieure du réacteur et est connecté à la conduite (2),

(b) une pluralité de collecteurs distributeurs (6.2), perpendiculaires à l'axe du réacteur, ces collecteurs étant connectés individuellement au collecteur distributeur central (6.1),

(c) au moins un collecteur receveur central (6.5), par exemple vertical, dont l'axe correspond à l'axe du réacteur, qui est situé dans la partie inférieure du réacteur et est connecté à la conduite (3),

(d) une pluralité de collecteurs receveurs (6.4), perpendiculaires à l'axe du réacteur, ces collecteurs étant connectés individuellement au collecteur receveur central (6.5),

(e) une pluralité de plaques creuses, continues et allongées destinées à la circulation du fluide caloporteur, chaque plaque comportant une ouverture sur un collecteur distributeur (6.2) et une ouverture sur un collecteur receveur (6.4).

Selon un perfectionnement de l'invention, les faces desdites plaques creuses sont constituées par des tôles ondulées dont les ondulations ont au choix l'une des formes suivantes: carrée, rectangulaire, triangulaire, sinusoidale et en chevrons, (voir figure 2 d), le but étant de créer une forte turbulence sur l'écoulement du fluide caloporteur.

Selon un autre perfectionnement de l'invention, le collecteur distributeur central (6.1), le collecteur receveur central (6.5), les collecteurs distributeurs (6.2) et les collecteurs receveurs (6.4) peuvent avoir des sections circulaires afin de mieux rigidifier les plaques creuses.

Une forme de réalisation préférentielle de l'invention consiste en ce que lesdites plaques creuses sont sensiblement parallèlépipédiques (6.3) ; chaque plaque comporte alors deux faces larges parallèles délimitant un plan disposé radialement par rapport à l'axe du réacteur et quatre faces minces, deux d'entre elles étant parallèles à l'axe du réacteur, les deux autres étant perpendiculaires à cet axe. De plus, chaque plaque est connectée, par sa face mince supérieure perpendiculaire à l'axe du réacteur, à un collecteur distributeur (6.2), et, par sa face mince inférieure perpendiculaire à l'axe du réacteur, à un collecteur receveur (6.4). Ces quatre faces minces peuvent, éventuellement, être non planes, mais par exemple semi-cylindriques.

Il faut noter qu'on peut alors aménager dans chacune desdites plaques creuses sensiblement parallèlépipédiques des canaux adjacents au moyen de tôles ondulées afin d'améliorer la circulation du fluide caloporteur, les sections desdits canaux avant au choix l'une des formes suivantes : carrée, rectangulaire (voir figure 2a), triangulaire (voir figure 2b), sinusoidale (voir figure 2c), ces canaux reliant entre elles les deux faces minces perpendiculaires à l'axe du réacteur d'une même plaque.

Selon une variante de l'invention, les plaques creuses peuvent éventuellement avoir des largeurs différentes, ce qui permet de maintenir un rapport minimum entre le volume de réacteur et la surface d'échange, tout en évitant une trop grande distance entre un point quelconque du réacteur et la plaque la plus proche.

Les tôles éventuellement utilisées dans les divers modes de réalisation de l'invention ont généralement moins de 10 millimètres d'épaisseur, de préférence moins de 3 millimètres d'épaisseur.

Dans la figure 1, donnée à titre d'exemple, on décrira le trajet du fluide caloporteur à travers des plaques creuses sensiblement parallélépipédiques. La charge pénètre dans le réacteur (1) par la conduite (4), passe à travers le lit catalytique contenu dans ledit réacteur, puis elle sort dudit réacteur par la conduite (5). Le fluide caloporteur, par exemple autogène (c'est-à-dire constitué par un ou plusieurs des composants constituant soit la charge fraîche, soit l'effluent réactionnel), passe du conduit (2) dans le collecteur distributeur central (6.1). Il se répartit ensuite dans les collecteurs distributeurs (6.2). Puis il pénètre dans chacune des plaques creuses (6.3) par leur face mince supérieure perpendiculaire à l'axe du réacteur, ces plaques creuses étant disposées au sein du lit catalytique contenu dans le réacteur (1). Le fluide descend à l'intérieur desdites plaques creuses sous la forme d'une nappe. A la sortie des plaques creuses, il est collecté dans les collecteurs receveurs (6.4) qui sont connectés individuellement au collecteur receveur central (6.5) dans lequel le fluide passe ensuite. Enfin, le fluide sort du réacteur par la conduite (3).

Le fluide peut être véhiculé, par exemple, par soutirage par une pompe (non représentée sur la figure 1) placée à la sortie du réacteur (1).

Généralement, au moins un des composants constituant la charge se trouve soit à l'état liquide, soit dans un état rendant possible sa circulation par une pompe (état supercritique).

Sur la figure 1, l'appareil est représenté en position sensiblement verticale : la circulation du fluide caloporteur et de la charge peut se faire de haut en bas, comme décrit précédemment, mais également de bas en haut. De même, l'appareil peut être utilisé en position sensiblement inclinée ou en position sensiblement horizontale : c'est par exemple le cas où le réacteur étant très long, il y a une différence sensible de la pression statique entre le bas et le haut du réacteur.

De plus, sur la figure 1, on a arbitrairement représenté la conduite (4) d'admission de la charge au sommet du réacteur (1) et la conduite (5) de soutirage de l'effluent réactionnel à la base du réacteur (1), mais ces conduits (4 et 5) peuvent en fait se situer à tout niveau adéquat du réacteur.

La figure 1 représente un réacteur axial dans lequel les réactifs traversent le lit de catalyseur de façon parallèle à l'axe du réacteur.

L'invention s'applique également à un réacteur radial comportant un panier perméable de la forme d'un anneau cylindrique, par exemple délimité par deux cylindres coaxiaux, dans lequel sont disposés le catalyseur et les plaques creuses et où les réactifs traversent le lit perpendiculairement à l'axe du réacteur.

Selon un perfectionnement de l'invention, la conduite (3) de soutirage du fluide caloporteur et la conduite (5) de soutirage de l'effluent réactionnel débouchent dans une même chambre (non représentée), cette chambre étant aménagée soit à l'intérieur, soit à l'extérieur du réacteur (1) et comportant une autre conduite par laquelle est soutiré le mélange fluide caloporteur-effluent réactionnel. Ce perfectionnement est particuliérement utilisé dans le cas d'un fluide caloporteur autogène, par exemple constitué à partir de l'effluent réactionnel ; le fluide caloporteur et l'effluent réactionnel sont, à la sortie du réacteur (1), mélangés dans ladite chambre de laquelle ils sortent ensemble par la conduite de soutirage; l'effluent réactionnel est alors envoyé vers le conditionnement ultérieur (non représenté) pendant que le fluide caloporteur, après un réajustement thermique convenable, est envoyé sur la conduite (2).

Selon un autre perfectionnement de l'invention, les conduites (2) et (4) proviennent d'une même chambre de mélange où sont amenés la charge réactionnelle fraiche et, le fluide caloporteur en provenance du conduit (3). Dans ce cas, le fluide caloporteur est autogène et par exemple constitué à partir de la charge fraîche.

L'avantage d'un fluide caloporteur autogène est, d'une part, qu'il n'y a pas de différence de pression entre l'intérieur et l'extérieur des plaques (à part celle créée par les pertes de charge dues à la circulation des fluides) et, d'autre part, qu'en cas de fuite, il n'y a pas de danger de pollution du système catalytique.

Les figures 2a, 2b et 2c représentent, selon un autre perfectionnement de l'invention, trois plaques creuses sensiblement parallélépipédiques (6.3) dans lesquelles on a aménagé des canaux adjacents (7a, 7b et 7c) au moyen de tôles ondulées, les sections desdits canaux ayant au choix l'une des formes suivantes : carrée, reactangulaire (7a), triangulaire (7b) et sinusoidale (7c), ces canaux reliant entre elles les deux faces minces perpendiculaires à l'axe du réacteur d'une même plaque : d'une part ,la présence de ces canaux adjacents assure la solidité des plaques creuses (6.3) qui peuvent atteindre et dépasser, par exemple, dix mètres de hauteur, d'autre part, elle évite la formation de zones mortes (c'est à-dire de zones non traversées par le fluide), zones mortes qui pourraient se former du fait de l'écoulement en nappe du fluide caloporteur à l'intérieur des plaques.

L'assemblage des tôles peut être réalisé soit par soudure, soit beaucoup plus économiquement par brasure soit par points, soit par immersion dans un bain, ou toute autre technique adéquate.

L'appareil selon l'invention peut être utilisé dans des procédés exothermiques ou endothermiques de traitement d'hydrocarbures.

## Revendications

1. Appareil comportant un réacteur (1) (voir figure 1) de forme sensiblement cylindrique et dont la section en coupe a une forme sensiblement circulaire, au moins une conduite (2) pour l'introduction d'un fluide caloporteur, au moins une conduite (3) pour le soutirage de ce fluide, au moins une conduite (4) pour l'introduction d'une charge dans le réacteur et au moins une conduite (5) pour le soutirage de l'effluent réactionnel du réacteur, caractérisé en ce qu'il renferme :

    a) au moins un collecteur distributeur central (6.1), dont l'axe correspond à l'axe du réacteur, qui est situé dans la partie supérieure du réacteur et est connecté à la conduite (2),

    b) une pluralité de collecteurs distributeurs (6.2), perpendiculaires à l'axe du réacteur, ces collecteurs étant connectés individuellement au collecteur distributeur central (6.1),

    c) au moins un collecteur receveur central (6.5), dont l'axe correspond à l'axe du réacteur, qui est situé dans la partie inférieure du réacteur et est connecté à la conduite (3),

    d) une pluralité de collecteurs receveurs (6.4), perpendiculaires à l'axe du réacteur, ces collecteurs étant connectés individuellement au collecteur receveur central (6.5),

    e) une pluralité de plaques creuses continues et allongées, destinées à la circulation du fluide caloporteur, chaque plaque comportant une ouverture sur un collecteur distributeur (6.2) et une ouverture sur un collecteur receveur (6.4) et étant disposée radialement par rapport à l'axe du réacteur.

2. Appareil selon la revendication 1 caractérisé en ce que les faces desdites plaques creuses sont constituées par des tôles ondulées dont les ondulations ont au choix l'une des formes suivantes : carrée, rectangulaire, triangulaire, sinusoidale et en chevrons.

3. Appareil selon la revendication 1 caractérisé en ce que lesdites plaques creuses sont sensiblement parallélépipédiques (6.3), chaque plaque comportant deux faces larges parallèles délimitant un plan disposé radialement par rapport à l'axe du réacteur et quatre faces minces, deux d'entre elles étant parallèles à l'axe du réacteur, les deux autres étant perpendiculaires à cet axe, chaque plaque étant connectée, par sa face mince supérieure perpendiculaire à l'axe du réacteur, à un collecteur distributeur (6.2) et, par sa face mince inférieure perpendiculaire à l'axe du réacteur, à un collecteur receveur (6.4).

4. Appareil selon la revendication 3 dans lequel on aménage dans chacune desdites plaques creuses des canaux adjacents au moyen de tôles ondulées, les sections desdits canaux ayant au choix l'une des formes suivantes : carrée, rectangulaire, triangulaire et sinusoidale, ces canaux reliant entre elles les deux faces minces perpendiculaires à l'axe du réacteur d'une même plaque.

5. Appareil selon l'une des revendications 2 à 4 caractérisé en ce que lesdites tôles ondulées ont moins de 10 millimètres d'épaisseur.

6. Appareil selon l'une des revendications 2 à 4 caractérisé en ce que lesdites tôles ondulées ont moins de 3 millimètres d'épaisseur.

7. Appareil selon l'une des revendications 1 à 6 caractérisé en ce que ledit collecteur distributeur central (6.1) et ledit collecteur receveur central (6.5) ont des sections circulaires.

8. Appareil selon l'une des revendication 1 à 7 caractérisé en ce que lesdits collecteurs distributeurs (6.2) et lesdits collecteurs receveurs (6.4) ont des sections circulaires.

9. Appareil selon l'une des revendications 1 à 8 caractérisé en ce que la conduite (3) de soutirage du fluide caloporteur et la conduite (5) de soutirage de l'effluent réactionnel débouchent dans une même chambre, cette chambre comportant au moins une autre conduite pour le soutirage du mélange fluide caloporteur-effluent réactionnel.

10. Appareil selon l'une des revendications de 1 à 9 caractérisé en ce que la conduite (2) d'introduction du fluide caloporteur et la conduite (4) d'introduction de la charge sont connectés à une même chambre de mélange.

11. Appareil selon l'une des revendications 1 à 10 caractérisé en ce qu'il comporte un panier perméable de la forme d'un anneau cylindrique dans lequel sont disposées lesdites plaques creuses.

12. Utilisation de l'appareil selon l'une des revendications 1 à 11 dans un procédé exothermique ou endothermique de traitement d'hydrocarbures.

## Patentansprüche

1. Vorrichtung mit einem im wesentlichen zylindrischen Reaktor (1) (siehe Figur 1), dessen Querschnitt im wesentlichen rund ist, mit mindestens einer Zuleitung (2) zur Einführung einer wärmeabführenden Flüssigkeit, mit mindestens einer Ableitung (3) zum Entzug dieser Flüssigkeit, mit mindestens einer Zuleitung (4) zur Einführung einer Charge in den Reaktor und mit mindestens einer Ableitung (5) zum Entzug des Reaktionseffluents des Reaktors, die dadurch gekennzeichnet ist,

a) daß mindestens eine zentrale Sammel-Verteiler-Vorrichtung (6.1) vorhanden ist, deren Achse der Reaktorachse entspricht und die im oberen Teil des Reaktors angeordnet ist und mit der Zuleitung (2) verbunden ist,

b) daß eine Vielzahl von Sammel-Verteilern (6.2) vorhanden ist, die senkrecht zur Reaktorachse angeordnet sind und jeweils mit der zentralen Sammel-Verteiler-Vorrichtung (6.1) verbunden sind,

c) daß mindestens eine zentrale Sammel-Empfänger-Vorrichtung (6.5) vorhanden ist, deren Achse der Reaktorachse entspricht und die im unteren Teil des Reaktors angeordnet ist und mit der Ableitung (3) verbunden ist,

d) daß eine Vielzahl von Sammel-Empfängern (6.5) vorhanden ist, die senkrecht zur Reaktorachse angeordnet sind und jeweils mit der zentralen Sammel-Empfänger-Vorrichtung (6.5) verbunden sind,

e) daß eine Vielzahl von ausgehöhlten, zusammenhängenden und langgestreckten Platten vorhanden ist, die zur Zirkulation der wärmeabführenden Flüssigkeit bestimmt sind, wobei jede Platte eine Öffnung zu einem Sammel-Verteiler (6.2) und eine Öffnung zu einem Sammel-Empfänger (6.4) aufweist und bezüglich der Reaktorachse radial angeordnet ist.

2. Vorrichtung nach Anspruch 1, dadurch gekennzeichnet, daß die Oberflächen der ausgehöhlten Platten durch Wellbleche gebildet sind, deren Wellungen wahlweise eine der folgenden Formen aufweisen: quadratisch, rechteckig, dreieckig, sinusförmig und zickzacklinienförmig.

3. Vorrichtung nach Anspruch 1, dadurch gekennzeichnet, daß die ausgehöhlten Platten (6.3) im wesentlichen quaderförmig sind, wobei jede Platte zwei große, breite, parallele Oberflächen aufweist, die eine radial zur Reaktorachse orientierte Ebene bestimmen, und vier schmale Oberflächen, von denen zwei parallel zur Reaktorachse und die beiden anderen senkrecht zu dieser Achse orientiert sind, und daß jede Platte mit ihrer schmalen, oberen, senkrecht zur Raktorachse orientierten Oberfläche mit einem Sammel-Verteiler (6.2) verbunden ist und mit ihrer schmalen, unteren, senkrecht zur Reaktorachse orientierten Oberfläche mit einem Sammel-Empfänger (6.4) verbunden ist.

4. Vorrichtung nach Anspruch 3, dadurch gekennzeichnet, daß in jeder der ausgehöhlten Platten aneinander grenzende Kanäle mit Hilfe von Wellblechen ausgebildet sind, wobei die Querschnitte dieser Kanäle wahlweise eine der folgenden Formen aufweisen: quadratisch, rechteckig, dreieckig und sinusförmig, und diese Kanäle die beiden schmalen, senkrecht zur Reaktorachse orientierten Oberflächen einer Platte miteinander verbinden.

5. Vorrichtung nach einem der Ansprüche 2 und 4, dadurch gekennzeichnet, daß die Wellbleche mindestens eine Dicke von 10 mm aufweisen.

6. Vorrichtung nach einem der Ansprüche 2 und 4, dadurch gekennzeichnet, daß die Wellbleche mindestens eine Dicke von 3 mm aufweisen.

7. Vorrichtung nach einem der Ansprüche 1 bis 6, dadurch gekennzeichnet, daß die zentrale Sammel-Verteiler-Vorrichtung (6.1) und die zentrale Sammel-Empfänger-Vorrichtung (6.5) runde Querschnitte aufweisen.

8. Vorrichtung nach einem der Ansprüche 1 bis 7, dadurch gekennzeichnet, daß die Sammel-Verteiler (6.2) und die Sammel-Empfänger (6.4) runde Querschnitte aufweisen.

9. Vorrichtung nach einem der Ansprüche 1 bis 8, dadurch gekennzeichnet, daß die Ableitung (3) zum Entzug der wärmeabführenden Flüssigkeit und die Ableitung (5) zum Entzug des Reaktionseffluents in eine gemeinsame Kammer münden, wobei diese Kammer mindestens eine weitere Ableitung zum Entzug der Mischung der wärmeabführenden Flüssigkeit und des Reaktionseffluents aufweist.

10. Vorrichtung nach einem der Ansprüche 1 bis 9, dadurch gekennzeichnet, daß die Zuleitung (2) zum Einführen der wärmeabführenden Flüssigkeit und die Zuleitung (4) zum Einführen der Charge mit einer gemeinsamen Mischkammer verbunden sind.

11. Vorrichtung nach einem der Ansprüche 1 bis 10, dadurch gekennzeichnet, daß sie einen durchlässigen Korb aufweist, der die Form eines zylindrischen Ringes aufweist, in dem die ausgehöhlten Platten angeordnet sind.

12. Vorrichtung nach einem der Ansprüche 1 bis 11, dadurch gekennzeichnet, daß sie bei einem exothermen oder endothermen Verfahren zur behandlung von Kohlenwasserstoffen verwendet wird.

## Claims

1. An apparatus comprising a reactor (1) (see figure 1) of substantially cylindrical shape whose cross section has a substantially circular shape, at least one duct (2) for the introduction of a heat-carrying fluid, at least one duct (3) for removing said fluid, at least one duct (4) for introducing a charge into the reactor and at least one duct (5) for removing the reaction effluent from the reactor, further comprising :

a) at least one central distributor manifold (6.1), whose axis corresponds to the axis of the reactor, which is situated in the upper part of the reactor and is connected to the duct (2),

b) a plurality of distributor manifolds (6.2) perpendicular to the axis of the reactor, these manifolds being connected individually to the central distributor manifold (6.1),

c) at least one central receiver manifold (6.3), whose axis corresponds to the axis of the reactor and is connected to the duct (3)

d) a plurality of receiver manifolds (6.4), perpendicular to the axis of the reactor, these manifolds being connected individually to the central receiver manifold (6.5),

e) a plurality of hollow plates, continuous and elongate, for the flow of the heat-carrying fluid, each plate comprising an opening on to a distributor manifold (6.2) and an opening on to a receiver manifold (6.4) and being located radially with respect to the reactor axis.

2. An apparatus according to claim 1 where in the faces of said hollow plates are formed by corrugated metal sheets whose corrugations may have one of the following forms : square, rectangular, triangular, sinusoidal, and a herring bone pattern.

3. An apparatus according to claim 1 where in said hollow plates are substantially parallelepipedic (6.3), each plate comprising two wide parallel faces defining a plane disposed radially with respect to the axis of the reactor and four narrow faces, two of them being parallel to the axis of the reactor, the other two being perpendicular to this axis, each plate being connected, by its narrow upper face perpendicular to the axis of the reactor, to a distributor manifold (6.2) and, by its narrow lower face perpendicular to the axis of the reactor, to a receiver manifold (6.4).

4. An apparatus according to claim 3 wherein adjacent channels are formed in each of said substantially parallelepipedic hollow plates by means of corrugated metal sheets, the sections of said channels having one of the following shapes : square, rectangular, triangular, and sinusoidal, these channels connecting together the two narrow faces perpendicular to the axis of the reactor in the same plate.

5. An apparatus according to one of claims 2 and 4 wherein said corrugated metal sheets have a thickness less than ten millimeters.

6. An apparatus according to one of claims 2 and 4, wherein said corrugated metal sheets have a thickness less than three millimeters.

7. An apparatus according to one of claims 1 to 6 wherein said central distributor manifold and said central receiver manifold have circular sections.

8. An apparatus according to one of claims 1 to 7 wherein said distributor manifolds and said receiver manifolds have circular sections.

9. An apparatus according to one of claims 1 to 8 wherein the duct for removing the heat-carrying fluid and the duct for removing the reaction effluent open into the same chamber, this chamber comprising at least one other duct for removing the heat-carrying fluid-reaction effluent mixture.

10. An apparatus according to one of claims 1 to 9 wherein said duct for introducing the heat-carrying fluid and said duct for introducing the charge are connected to the same mixing chamber.

11. An apparatus according to one of claims 1 to 10 comprising a permeable basket having the shape of a cylindrical ring in which said hollow plates are disposed.

12. Use of an apparatus according to one of claims 1 to 11 in an exothermic or an endothermic process for treating hydrocarbons.

**FIG.1**

2

4

6.2

6.1

6.3

1

6.5

6.4

5

3

**FIG.2A**

6.3  7a

**FIG.2B**

6.3  7b

**FIG.2C**

6.3  7c

**FIG.2D**